# EUROPEAN PATENT APPLICATION

(11) **EP 4 439 945 A1**
(43) Date of publication of application: **02.10.2024**
(21) Application number: 23164705.8
(22) Date of filing: 28.03.2023
(51) Int. Cl.: H02M 1/00, H02M 1/12, H02M 7/487, H02M 7/5395

(54) **FLAT-TOP MODULATED 3-LEVEL NPC CONVERTER WITH ASYMMETRIC 2-LEVEL MODULATION AT LOWER MODULATION DEPTHS**

(71) Applicant: Siemens Aktiengesellschaft, 80333 München (DE)
(72) Inventor: Mondal, Gopal, 91058 Erlangen (DE)
(74) Representative: Siemens Patent Attorneys

(57) **Abstract**

Three-level neutral point clamped converter. As slightly changed structure of the converter makes it possible to operate the converter based on an improved operation scheme for low modulation index. In this way, it is possible to minimize a maximum common mode current.

## Description

The present invention relates to a three-level neutral point clamped converter and a method for operating such a three-level neutral point clamped converter. The present invention further relates to a renewable energy generation system comprising a three-level neutral point clamped converter.

Independent of the grammatical term usage, individuals with male, female or other gender identities are included within the term.

Power converters may be used for multiple applications, wherein an input voltage has to be converted into a desirable output voltage. During this conversion, the characteristics (AC/DC), a frequency of the voltages, a voltage level or any other parameter may be changed. For example, power converters may be used for converting a direct current (DC) voltage into an alternating current (AC) voltage having one or more phases. Such a converter may be also denoted as an inverter.

One possible implementation type of such a power converter for converting a DC voltage into an AC voltage is a so-called three-level neutral point clamped (NPC) converter. These types of converts are very popular due to their simplicity in the group of multilevel converters. In further applications, three-level NPC converters may be used for converting an AC voltage into a DC voltage in a rectifier mode.

Three-level NPC converters may be controlled based on multiple different pulse width modulation (PWM) schemes. For example, the converters may be controlled by a so-called flat-topped or bus-clamped modulation scheme which is very popular due to its reduced switching losses. In particular, this modulation scheme allows higher switching frequency with a same cooling structure compared to other PWM schemes like sine-triangle PWM or space vector PWM.

Besides the advantages of low switching losses, the flat-top modulation scheme has the disadvantage of a relatively high common mode current during the operation of low modulation index. Thus, the filter inductor has to be selected larger to make sure that the inductor does not saturate during low modulation index operation.

It is therefore desirable to provide an improved configuration of a three-level neutral point clamped inverter and a method for operating such a three-level neutral point clamped inverter which can minimize the common mode current, in particular during operation in low modulation index.

The present invention therefore provides a three-level neutral point clamped inverter and a method for operating a three-level neutral point clamped inverter with the features of the independent claims. Further advantageous embodiments are subject matter of the dependent claims.

According to a first aspect, a three-level neutral point clamped converter is provided. The three-level neutral point clamped converter may convert a DC voltage provided between a positive input terminal and a negative input terminal into an AC voltage. The converter comprises multiple legs. In particular, the converter may comprise an individual leg for each phase of a desired multiphase AC output voltage. Each leg may comprise a first switch, a second switch, a third switch and a fourth switch. Further, each leg may comprise a first capacitor, a second capacitor, a first diode, a second diode and an inductor. The first switch is connected between the positive input terminal and a first node. The second switch is connected between the first node and a second node. The third switch is connected between the second node and a third node. The fourth switch is connected between the third node and the negative input terminal. The first capacitor is connected between the positive input terminal and a fourth node. The second capacitor is connected between the negative input terminal and the fourth node. The first diode is connected between the fourth node and the first node. The second diode is connected between the fourth node and the third node. The inductor is connected between the second node and an output terminal of the respective leg.

According to a further aspect, a renewable energy generating system is provided. The renewable energy generating system comprises a DC power source and a three-level neutral point clamped converter according to the first aspect. The DC power source is configured to generate DC power based on renewable energy.

According to still a further aspect, a method for operating a three-level neutral point clamped converter is provided. The three-level neutral point clamped converter comprises multiple legs. In particular, a separate leg may be provided for each phase of a desired AC output voltage. The converter may be adapted for converting a DC input voltage provided between a positive input terminal and a negative input terminal into an AC output voltage. Each leg of the converter comprises a first switch connected between the positive input terminal and a first node, a second switch connected between the first node and a second node, a third switch connected between the second node and a third node, a fourth switch connected between the third node and the negative input terminal. Each leg further comprises a first capacitor connected between the positive input terminal and a fourth node, and a second capacitor connected between the negative input terminal and the fourth node. Further, each leg comprises a first diode connected between the fourth node and the first node, a second diode connected between the fourth node and the third node, and an inductor connected between the second node and the output terminal of the respective leg. The method comprises the steps of generating control signals for operating the first switch, the second switch, the third switch and the fourth switch in a first operation mode, if a modulation index exceeds a predetermined threshold value. Further, the method comprises a step of generating control signals for operating the first switch, the second switch, the third switch and the fourth switch in a second operation mode, if the modulation index is below the predetermined threshold value. In particular, the output power is alternately provided by either the first capacitor or the second capacitor in the second operating mode.

The present invention is based on the finding that a flat top modulation scheme allows a very advantageous operation of a three-level neutral point clamped (NPC) converter. In particular, the flat top modulation scheme can achieve relative low switching losses compared to alternative PWM schemes like sine-triangle PWM or space vector PWM. However, conventional flat top modulation may cause relatively high common mode current during operation in low modulation index. For this purpose, an inductor of a filter has to be selected with relative high values in order to make sure that the inductor is not saturated during low modulation index operation.

Based on this finding, the present invention aims to provide an improved three-level neutral point clamped (NPC) converter and a method for operating such an improved three-level NPC converter which makes it possible to reduce the common mode current during a flat top operation in low modulation index.

It is for this purpose that separate, individual capacitors are provided for each leg of the three-level NPC converter. In other words, the arrangement of the two capacitors which are arranged in series for all legs of a conventional power converter is separated into a configuration with separate arrangements of two capacitors in series for each leg of the three-level NPC converter according to the present invention. Based on such a slightly modified configuration, it is possible to operate the individual legs of the converter like a two-level converter for a low modulation index, in particular a modulation index below 0.5. Accordingly, only two of the four switches of a leg have to be switched at a high frequency for PWM. The remaining two other switches of the respective leg may be operated at a relative low frequency. In particular, the remaining switches only have to be operated in order to achieve of a balancing of the two capacitors in the respective leg.

Based on such an improved circuitry for a three-level NPC converter and the related operation scheme for operating the converter similar to a two-level converter for low modulation index, the resulting common mode can be significantly reduced. This makes it possible to reduce the requirements for the related inductors in the filter circuit of the converter. Hence, the size, weight and required volume for the inductors can be minimized based on only a slightly modification of the three-level NPC configuration. Further to this, the efficiency can be also improved, since only two of four switches have to be operated with high frequency for low modulation index operation.

According to an embodiment of the three-level NPC converter, the converter comprises a control unit. The control unit is configured to generate control signals for controlling the first switches, the second switches, the third switches and the fourth switches of the legs of the converter. In particular, the control unit is configured to generate control signals in a first operation mode, if a modulation index exceeds a predetermined threshold value. Alternatively, the control unit generates control signals in a second operation mode, if the modulation index is below the predetermined threshold value. In particular, the control signals for the switches may be generated in the first operation mode, if the modulation index is 0.5 or above, and the switches may be operated in the second operation mode, if the modulation index is below 0.5. In the second operation mode, the output power is alternately provided by either the first capacitor or the second capacitor of a respective leg. Accordingly, in the second operating mode, the switches of the respective leg may be operated similar to a two-level converter, providing the output power by one of the two capacitors.

In a possible embodiment, the control unit is configured to toggle between the first capacitor and the second capacitor in the second operation mode. By toggling the capacitor providing the output power alternately, a balancing of the two capacitors can be achieved. In particular, the control unit may toggle between the first and the second capacitor after a predetermined number of periods of a frequency of an output voltage. For example, the control unit may toggle between the first and the second capacitor e.g. after two or four full periods of the output voltage. However, depending on the capacity of the related capacitors and the demands for balancing the capacitors, the number of periods may be selected in an appropriate manner. In this way, an appropriate balancing of the related capacitors can be achieved.

According to a further embodiment, the control unit is configured to apply a flat top modulation scheme in the second operation mode. Flat top modulation can provide some advantageous benefits such as reduced switching losses. Since the configuration and operation mode according to the present invention provides reduced common mode currents, the disadvantages of flat top modulation in low modulation index can be avoided.

In a possible embodiment, the control unit is configured to open the first switch and to close the third switch in a first phase of the second operation mode, in which the output power is provided by the first capacitor. Alternatively, the control unit may open the fourth switch and close the second switch in a second phase of the second operation mode in which the output power is provided by the second capacitor. In this way, fixed states for the respective switches may be set, while the output power is controlled only based on PWM of the remaining switches.

In a possible embodiment, the control unit is configured to control an amplitude of the output voltage by a pulse width modulated control of the second and the fourth switch in the first phase of the second operation mode. Alternatively, the amplitude of the output voltage is controlled by a pulse width modulated control of the first and the third switch in the second phase of the second operation mode. Accordingly, only two switches of a respective leg have to be operated by high frequency. In this way, the converter is operated in the second operation mode during low modulation index similar to a two-level converter.

In a possible embodiment, the control unit is configured to apply a pulse width modulated control of the first switches, the second switches, the third switches and the fourth switches in the first operation mode. In particular, the control unit may apply a flat top modulation scheme of all switches in the first operation mode. In this way, an efficient operation of the converter can be achieved due to the relative low switching losses in flat top modulation.

In the following, possible embodiments of the different aspects of the present invention are described in more detail with reference to the enclosed figures.
- Fig. 1:: a schematic circuit diagram of a conventional three-level NPC converter;
- Fig. 2:: a timing diagram for illustrating the generation of control signals for controlling a conventional three-level NPC converter;
- Fig. 3:: a schematic circuit diagram illustrating a three-level NPC converter according to an embodiment of the present invention;
- Fig. 4:: a schematic circuit diagram illustrating one leg of a three-level NPC converter according to an embodiment;
- Fig. 5:: a schematic timing diagram illustrating the generation of control signals of a three-level NPC converter according to an embodiment;
- Fig. 6:: a schematic block diagram illustrating possible applications of a three-level NPC converter according to an embodiment; and
- Fig. 7:a: flow diagram illustrating a method for controlling a three-level NPC converter according to an embodiment.

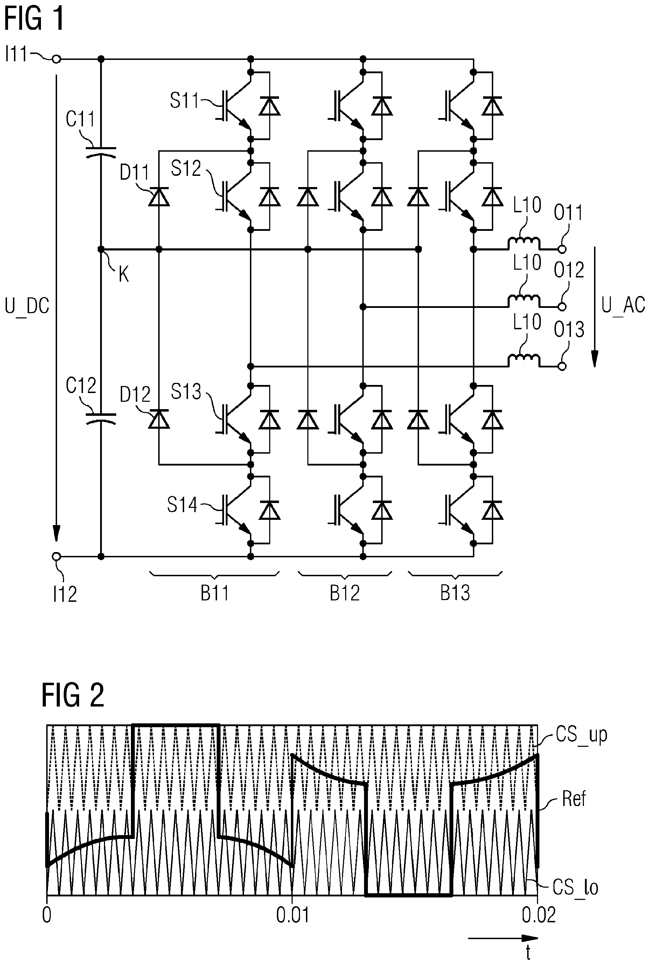

Figure 1 illustrates a schematic circuit diagram of a conventional three-level neutral point clamped (NPC) converter. As can be seen in figure 1, a direct current (DC) input voltage U_DC may be provided between a positive input terminal I11 and a negative input terminal 112. A first capacitor C11 is arranged between the positive input terminal I11 and a central node K. A second capacitor is arranged between the negative input terminal I12 and the central node K. Further, the conventional converter comprises three legs B11, B12 and B13. Each leg comprises four switches S11-S14. A first switch is arranged between the positive input terminal I11 and a first node, a second switch is arranged between the first node and a second node, a third switch is arranged between the second node and a third node, and a fourth switch is arranged between the third node and the negative input terminal I12. The first diode D11 is arranged between the central node K and the first node, and a second diode D12 is arranged between the central node K and the third node of a leg B11-B13. Additionally, an inductor L11-L13 is arranged between the second node of a leg B11-B13 and an output terminal 011-013. In this way, the converter may convert the direct current input voltage U_DC into an alternating current output voltage U_AC. In the illustrated example, a three-phase alternating output current U_AC can be generated by three legs B11-B13.

As can be clearly seen in figure 1, the conventional three-level NPC converter only comprises a single arrangement of two capacitors C11 and C12 between the input terminals I11, I12.

In order to perform the voltage conversion from the DC input voltage U_DC into the desired AC output voltage U_AC, the individual switches of the converter may be controlled based on a flat top modulation scheme. In such a control, a modulation index is given which depends on the ratio between the input voltage U_DC and the amplitude in the phases of the output voltage U_AC.

Especially, a low modulation index is given, in case that a level of the input voltage U_DC is significantly higher than the amplitude of the desired output voltage U_AC.

In case of a flat top modulation scheme, common mode noise with relatively high common mode currents may occur. Thus, the inductors L10 for filtering the common mode noise have to be selected with relative high values in order to avoid a saturation of the inductors.

Figure 2 shows a schematic illustration of a timing diagram illustrating the generation of the control signals for the switches S11-S14 of a conventional three-level NPC converter with low modulation index and two carrier signals CS_lo, CS_up. In this example, two triangular carrier signals CS_lo and CS_up are given. Further, a reference signal Ref is provided. The control signals for controlling the gates of the switches S11-S14 are generated based on a comparison of the reference signal Ref and the carrier signals CS_lo and CS_up. For a three-level NPC converter, each carrier signal is used to generate gate pulses for two complementary switches. A comparison of the reference signal Ref with the upper carrier CS_up generates complementary gate pulses for a top switch S11 and a third S13 from the top switch. Accordingly, a comparison of the reference signal with the lower carrier signal CS_lo generates complementary gate pulses for the second S12 from the top and the bottom switch S14 of a phase. During such a control, it can be observed that a peak of a common mode current is much higher for low modulation index compared to higher modulation index. A high common mode current due to low modulation index occurs in this control scheme due to the shape of the modulation reference Ref. The clamped portion is always touching the peak of the top and bottom carrier signals, which produce a large jump of the modulation value during the transient from normal to clamped mode.

The present invention aims to reduce this jump in order to reduce the common mode current.

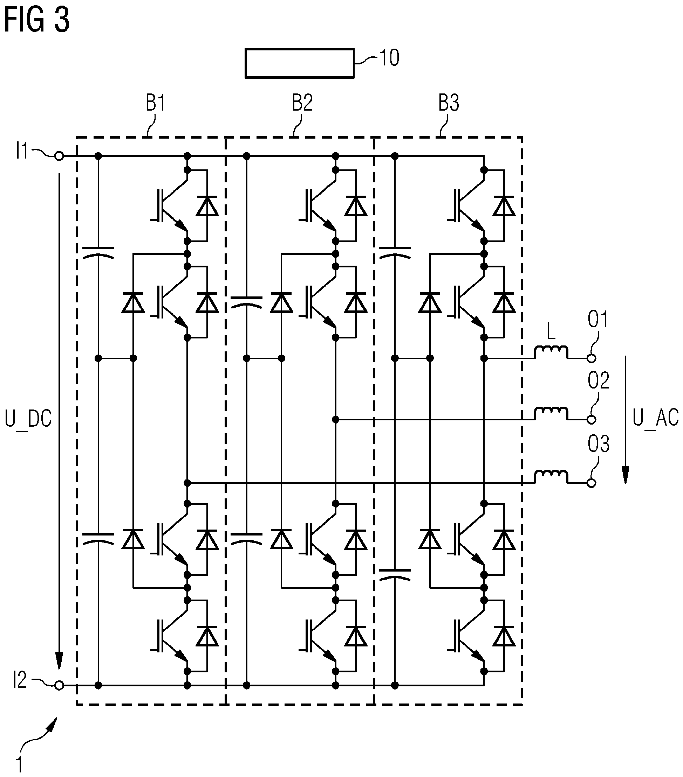

Figure 3 shows a schematic circuit diagram of a three-level NPC converter 1 according to an embodiment of the present invention. The three-level NPC converter 1 may receive a direct current input voltage U_DC between a positive input terminal I1 and a negative input terminal I2. The converter 1 may convert this DC input voltage U_DC into a desired AC output voltage U_AC and provide this output voltage U_AC at the output terminals 01-03 of the converter 1.

The three-level NPC converter 1 of the present invention may comprise multiple legs B1-B3. Even though a three-phase converter with three legs B1-B3 is illustrated and described in connection with figure 3, the present invention is not mandatory limited to such an arrangement with three legs B1-B3. Moreover, it may be also possible to adapt the general scheme to a converter having a different number of output phases and accordingly, a different number of legs.

As can be seen in figure 3, each leg B1-B3 of the three-level NPC converter 1 comprises a separate, individual arrangement of two capacitors C1, C2 which are arranged in series between the positive input terminal I1 and the negative input terminal I2. In other words, the common capacitor arrangement of a conventional three-level NPC converter is split into multiple capacitor arrangements, wherein an individual capacitor arrangement is provided in each leg B1-B3 of the converter 1.

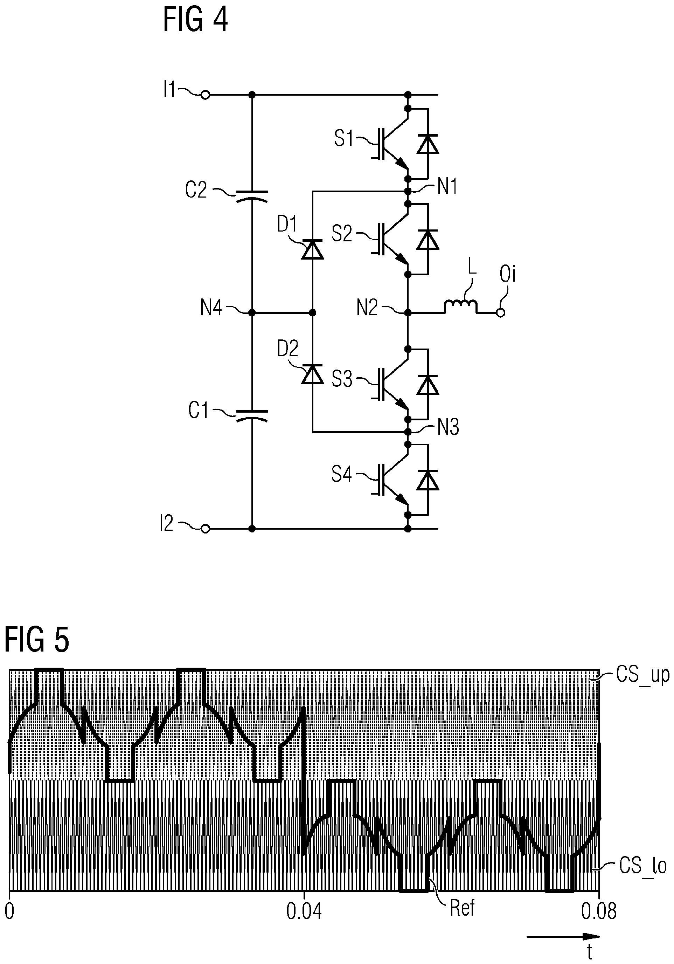

Figure 4 shows a schematic circuit diagram illustrating one leg B1-B3 of a three-level NPC converter 1 according to the present invention. It is understood, that all legs B1-B3 of such a three-level NPC converter 1 may be structured in the same way.

Each leg B1-B3 of the three-level NPC converter 1 comprises four switches S1-S4, in particular four semiconductor switches such as MOSFET or bipolar transistors having an insulated gate (IGBT). However, any other appropriate kind of semiconductor switch may be possible, too. Further, each leg B1-B3 comprises two diodes D1 and D2, and two capacitors C1 and C2.

A first switch S1 is arranged between the positive input terminal I1 and a first node N1. A second switch S2 is arranged between the first node N1 and a second node N2. A third switch S3 is arranged between the second node N2 and a third node N3. A fourth switch S4 is arranged between the third node N3 and the negative input terminal I2. A first capacitor C1 is arranged between the positive input terminal I1 and a fourth node N4. A second capacitor C2 is arranged between the negative input terminal I2 and the fourth node N4. A first diode D1 is arranged between the fourth node N4 and the first node N1. A second diode D2 is arranged between the fourth node N4 and the third node N3. An inductor L may be arranged between the second node N2 and an output terminal 01-03 associated with the respective leg B1-B3.

For high modulation index, in particular modulation index of 0.5 or above, the three-level NPC converter 1 may be operated similar to a conventional three-level NPC converter. In particular, a control unit 10 may generate control signals for operating the gates of the switches S1-S4 as already described above in connection with the conventional NPC converter. In particular, a flat top modulation scheme may be applied for this purpose.

For low modulation index, in particular modulation index below 0.5, the three-level NPC converter 1 of the present invention may be operated by a slightly different operation scheme. This operation scheme will be described in more detail below. In particular, the enhanced operation scheme may control the switches S1-S4 of the legs B1-B3 in an operation mode, wherein two switches S1-S4 are set to a fixed state, while the other two switches S1-S4 are operated by PWM similar to an operation of a two-level converter. Thus, the output power of the converter 1 provided at the out terminals 01-03 may be taken either from the first capacitor C1 or the second capacitor C2. In order to achieve a balancing of the two capacitors C1 and C2, a toggling between the first capacitor C1 and the second capacitor C2 may be applied.

Figure 5 schematically shows a timing diagram for illustrating the generation of the control signals according to an embodiment. As can be seen in figure 5, the reference signal Ref in the control scheme according to the present invention only goes either in the area of the upper carrier CS_up or the lower carrier CS_lo. Thus, only two switches S1, S3 or S2, S4 have to be operated with a high frequency control signal. The other two switches S2, S4 or S1, S3 have to be operated with a significantly lower frequency during a transition from the upper carrier CS_up to the lower carrier CS_lo or vice versa is performed.

As already mentioned above, such a transition between the upper carrier CS_up and the lower carrier CS_lo only is applied in order to achieve a balancing of the capacitors C1 and C2. Thus, such a transition only has to be performed after a predetermined number of periods of the frequency of the output voltage U_AC. For example, the toggling between the first capacitor C1 and the second capacitor C2 may be applied after two periods, three periods, four periods, etc. The specific parameters for the determination how often a toggling between the first and the second capacitors C1, C2 has to be applied may depend on the constraints regarding the balancing, for example the capacitance of the capacitors C1, C2 or the like.

In the following, a possible operation scheme for operating the switches S1-S4 in the legs B1-B3 of the three-level NPC converter 1 according to the present invention is described.

As already mentioned above, the operation for a high modulation index, in particular a modulation index larger than 0.5 may correspond to the operation scheme of a conventional three-level NPC converter. In particular, a flat top operation scheme may be applied.

In case of a low modulation index, in particular a modulation index below 0.5, the control of the switches may be performed as follows.

In a first phase, the output power may be provided by the first, upper capacitor C1. For this purpose, the second switch S2 may be constantly switched on, i.e. switch S1 is in a closed state. At the same time, the fourth switch S4 may be switched off, i.e. switch S4 is open. Accordingly, the first, upper capacitor C1 may be charged. For this purpose, a current may flow from the negative terminal of the first capacitor C1, i.e. the fourth node N4 through the first diode D1 and the second switch S2 to the inductor L and the related output terminal 01-03. In this way, the potential of the fourth node N4 will decrease which will lead to a charging of the first capacitor C1.

Alternatively, in this phase, the first capacitor C1 may be discharged by a current flowing from the related output terminal 01-03 through the respective inductor L to the second node N2, further through the third switch S3 and the second diode D2 to the fourth node N4 which is the negative terminal of the first capacitor C1.

Alternatively, in a second phase of the operating mode for a lower modulation index, the second, lower capacitor C2 may be charged and discharged. For this purpose, the first switch S1 is switched off, i.e. this switch is open, and the third switch S3 is on, i.e. the third switch S3 is closed.

In this configuration, a current may flow from the fourth node N4, which is the positive terminal of the second capacitor C2, through the first diode D1 and the second switch S2 to the second node N2 and through the related inductor L to the respective output terminal 01-03.

Alternatively, the second capacitor C2 may be charged by a current which flows from the respective output terminal 01-03 to the related inductor L to the second node N2, and further through the third switch S3 and the second diode D2 to the fourth node N4 which is the positive terminal of the second capacitor C2. Thus, by increasing the potential at the fourth node N4 being the positive terminal of the second capacitor C2, the second capacitor C2 can be charged.

Based on the above described operational scheme, control unit 10 may perform a flat top PWM operation scheme for low modulation index. Especially, the operation between the first phase using the first capacitor C1 and the second phase using the second capacitor C2 may be toggled in order to achieve an appropriate balancing of the related capacitors C1 and C2.

It is understood, that the above described operational scheme may be applied to all legs B1-B3 of the converter 1 in a same manner.

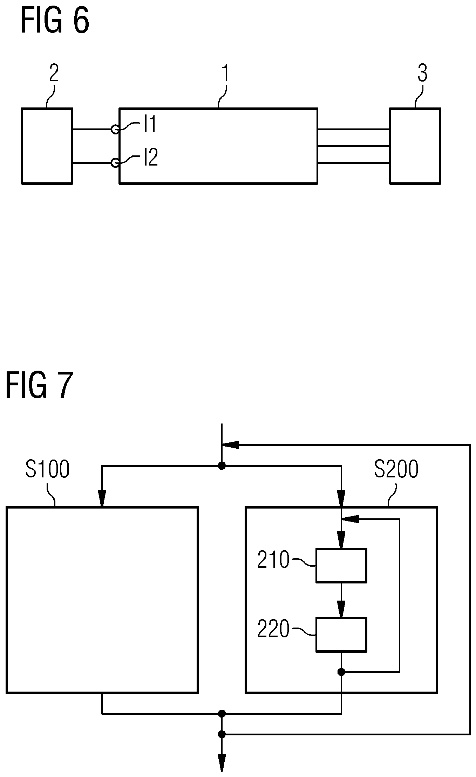

Figure 6 shows a schematic block diagram illustrating a possible use case for a three-level NPC converter 1 according to an embodiment. As can be seen in figure 6, a direct current source 2 may provide a DC voltage between the positive input terminal I1 and the negative input terminal I2 of the converter 1. Converter 1 may perform a conversion of the applied input voltage U_DC to a desired output voltage U_AC and provide this output voltage U_AC to any appropriate load. For example, such a load may be an electric motor 3. Thus, by controlling the output voltage and/or output current, speed and/or torque of the electric motor 3 can be controlled. However, load 3 may be any other kind of appropriate load.

Alternatively, converter 1 may provide the generated output voltage U_AC to an energy grid. In particular, it may be possible to provide a DC input voltage from a DC voltage generator 2, in particular a power generator for renewable energy. Such a power generator 2 may be, for example, a photovoltaic system, a wind turbine, or any other kind of power generator, in particular renewable power generator. In this way, electric energy from a renewable energy source may be converted to electric power which is provided to the associated grid 3. However, it is understood, that the three-level NPC converter 1 according to the present invention may be also used for any other appropriate application.

Figure 7 shows a schematic flow diagram illustrating a method for controlling a three-level NPC converter 1 according to an embodiment. In particular, the method may be applied to the three-level NPC converter 1 as already described above. Thus, all explanations which have been already provided above in connection with the NPC converter 1 according to the present invention may be also applicable to the method as described below. Accordingly, the above-described NPC converter 1 may comprise components for implementing the method as described below.

The method may comprise a step S100 for generating control signals for operating the first, second, third and fourth switches S1- S4 in a first operation mode. This first operation mode is applied if a modulation index exceeds a predetermined threshold value, for example a threshold value of 0.5 or above. In this first operation mode, the first, second, third and fourth switches S1-S4 may be controlled based on a flat top modulation scheme, in particular a conventional flat top modulation scheme.

Further, the method may comprise a step S200 for controlling the first, second, third and fourth switches S1-S4 in a second operation mode. This second operation mode may be performed if the modulation index is below a predetermined threshold value, in particular below 0.5. In this second operation mode, the output power of the converter 1 is provided alternately by either the first capacitor or the second capacitor C2. In particular, the output power may be provided in a first phase S210 by using the first capacitor C1 and in a second phase S220 by using the second capacitor C2.

In the second operation mode, the method may toggle between the first phase S210 and the second phase S220 after predetermined number of periods of a frequency of the output voltage U_AC.

Especially, a flat top modulation scheme may be applied in the second operation mode.

Summarizing, the present invention relates to an advanced three-level neutral point clamped converter. As slightly changed structure of the converter makes it possible to operate the converter based on an improved operation scheme for low modulation index. In this way, it is possible to minimize a maximum common mode current.

## Claims

1. Three-level neutral point clamped converter (1) for converting a DC voltage (U_DC) provided between a positive input terminal (I1) and a negative input terminal (I2) into an AC voltage (U_AC), the converter (1) comprising:
multiple legs (B1-B3), wherein each leg (B1-B3) comprises
a first switch (S1) connected between the positive input terminal (I1) and a first node (N1),
a second switch (S2) connected between the first node (N1) and a second node (N2),
a third switch (S3) connected between the second node (N2) and a third node (N3),
a fourth switch (S4) connected between the third node (N3) and the negative input terminal (I2),
a first capacitor (C1) connected between the positive input terminal (I1) and a fourth node (N4),
a second capacitor (C2) connected between the negative input terminal (I2) and the fourth node (N4),
a first diode (D1) connected between the fourth node (N4) and the first node (N1),
a second diode (D2) connected between the fourth node (N4) and the third node (N3), and
an inductor (L) connected between the second node (N2) and an output terminal (01-03) of the leg (B1-B3).

2. Converter (1) according to claim 1, comprising a control unit (10), configured to generate control signals for controlling the first, second, third and fourth switches (S1-S4),
wherein the control unit (10) is configured to generate the control signals in a first operation mode, if a modulation index exceeds a predetermined threshold value, and to generate control signals in a second operation mode, if the modulation index is below the predetermined threshold value,
wherein in the second operation mode the output power is alternately provided by using either the first capacitor (C1) or the second capacitor (C2).

3. Converter (1) according to claim 2, wherein the control unit (10) is configured to toggle between the first capacitor (C1) and the second capacitor (C2) after a predetermined number of periods of frequency of an output voltage (U_AC) in the second operation mode.

4. Converter (1) according to claim 2 or 3, wherein the control unit (10) is configured to apply a flat top modulation schema in the second operation mode.

5. Converter (1) according to any of claims 2 to 4, wherein the control unit (10) is configured to open the first switch (51) and to close the third switch (S3) in a first phase of the second operation mode in which the output power is provided by using the first capacitor (C1), and
to open the fourth switch (S4) and to close the second switch (S2) in a second phase of the second operation mode in which the output power is provided by using the second capacitor (C2) .

6. Converter (1) according to claim 5, wherein the control unit (10) is configured to control an amplitude of an output voltage(U_AC) by a pulse width modulated control of the second switch (S2) and the fourth switch (S4) in the first phase of the second operation mode, and to control the amplitude of the output voltage (U_AC) by a pulse width modulated control of the first switch (S1) and the third switch (S3) in the second phase of the second operation mode

7. Converter (1) according to any of claims 2 to 6, wherein the control unit (10) is configured to apply a pulse width modulated control to the first, second, third and fourth switch (S1-S4) in the first operation mode.

8. Converter (1) according to any of claims 2 to 7, wherein the control unit is configured to apply a flat top modulation schema in the first operation mode.

9. Inverter for converting a DC voltage into a three phase AC voltage, the inverter comprising a converter (1) according to any of claims 1 to 8 with three legs (B1-B3).

10. Renewable energy generation system, comprising:
a DC power source (2) configured to generate DC power based on renewable energy, and
a converter (1) according to any of claims 1 to 8.

11. Method for operating a three-level neutral point clamped converter (1) including multiple legs (B1-B3), the converter (1) being adapted to converting a DC voltage (U_DC) provided between a positive input terminal (I1) and a negative input terminal (I2) into an AC output voltage (U_AC), wherein each leg (B1-B3)comprises a first switch (S1) connected between the positive input terminal (I1) and a first node (N1), a second switch (S2) connected between the first node (N1) and a second node (N2), a third switch (S3) connected between the second node (N2) and a third node (N3), a fourth switch (S4) connected between the third node (N3) and the negative input terminal (I2), a first capacitor (C1) connected between the positive input terminal (I1) and a fourth node (N4), a second capacitor (C2) connected between the negative input terminal (I2) and the fourth node (N4), a first diode connected between the fourth node (N4) and the first node (N1), a second diode (D2) connected between the fourth node (N4) and the third node (N3), and an inductor (L) connected between the second node (N2) and an output terminal (O1-O3) of the leg (B1-B3),
wherein the method comprises the steps of
generating (S100) the control signals for operating the first, second, third and fourth switches (S1-S4) in a first operation mode if a modulation index exceeds a predetermined threshold value, and
generating (S200) control signals for operating the first, second, third and fourth switches (S1-S4) in a second operation mode if the modulation index is below the predetermined threshold value,
wherein in the second operation mode the output power is alternately provided by using either the first capacitor (C1) or the second capacitor (C2).

12. Method according to claim 11, wherein the provision of the output power from the first capacitor (C1) or the second capacitor (C2) is toggled after a predetermined number of periods in the frequency of the AC output voltage (U_AC) in the second mode.

13. Method according to claim 11 or 12 wherein a flat top modulation schema is applied in the second operation mode.

14. Method according to any of claims 11 to 13, wherein the first switch (S1) is opened and the third switch (S3) is closed in a first phase of the second operation mode in which the output power is provided by using the first capacitor (C1), and
the fourth switch (S4) is opened and the second switch (S2) is closed in a second phase of the second operation mode in which the output power is provided by using the second capacitor (C2).

15. Method according to claim 14, wherein an amplitude of the AC output voltage (U_AC) is controlled by a pulse width modulated control of the second switch (S2) and the fourth switch (S4) in the first phase of the second operation mode, and the amplitude of the AC output voltage (U_AC) is controlled by a pulse width modulated control of the first switch (S1) and the third switch (S3) in the second phase of the second operation mode
